(19) Europäisches Patentamt
European Patent Office
Office européen des brevets

(11) **EP 2 123 787 A1**

(12) **DEMANDE DE BREVET EUROPEEN**

(43) Date de publication:
**25.11.2009 Bulletin 2009/48**

(51) Int Cl.:
***C22C 38/18*** *(2006.01)*   ***C22C 38/58*** *(2006.01)*
***C22C 38/22*** *(2006.01)*   ***B29C 33/38*** *(2006.01)*

(21) Numéro de dépôt: **08300199.0**

(22) Date de dépôt: **06.05.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(71) Demandeur: **INDUSTEEL CREUSOT**
**93200 Saint-Dénis (FR)**

(72) Inventeurs:
- **Beguinot, Jean**
  **71200 Le Creusot (FR)**
- **Ngomo, Valéry**
  **71200 Le Creusot (FR)**

(74) Mandataire: **Jacobson, Claude**
**Cabinet Lavoix**
**2, place d'Estienne d'Orves**
**75441 Paris Cedex 09 (FR)**

(54) **Acier à hautes caractéristiques pour pièces massives**

(57) Acier à haute résistance dont la composition chimique comprend, en poids :

$$0,03\% \leq C \leq 0,7\%$$

$$Si \leq 0,49\%$$

$$2,5\% < Mn \leq 4\%$$

et

$$Mn > 3\% \text{ si } C < 0,2\%$$

$$Ni \leq 0,9\%$$

$$1\% \leq Cr \leq 5\%$$

$$Mo + W/2 \leq 1\%$$

$$Cu \leq 0,9\%$$

$$S + Se/2 + Te/3 < 0,020\%$$

$$Al \leq 0,1\%$$

Le reste étant du fer et des impuretés résultant de l'élaboration.

**Description**

La présente invention est relative à un acier à haute résistance destiné notamment à la fabrication de pièces de grande dimension telles que des pièces de moules pour matière plastique, des pièces d'outillage telles que des matrices, ou des pièces d'usure telles que des pièces destinées à résister à l'abrasion.

Pour de nombreuses applications, les pièces de mécanique qui sont soumises à des efforts importants ou à des sollicitations à l'usure très importantes doivent être réalisées dans des aciers ayant des résistances élevées correspondant à des duretés comprises entre 300 et 500 HB voire pouvant atteindre 600 HB, mais qui doivent cependant rester suffisamment tenaces, usinables, soudables, etc... Sur des blocs constitués de tels aciers, on constate souvent l'existence de points durs qui résultent de ségrégations. Ces ségrégations correspondent à des variations locales de composition chimique qui résultent des phénomènes de solidification des lingots à partir desquels les blocs sont réalisés. Ces points durs présentent plusieurs inconvénients. En effet, ils peuvent avoir pour conséquence de rendre l'usinage ou le polissage régulier difficile, ce qui peut poser des problèmes de réalisation de pièces pour lesquelles la précision géométrique et la qualité de surface sont importants. Ces variations de dureté peuvent également avoir pour conséquence de générer des zones fragiles qui peuvent être des sites préférentiels d'amorçage de fissure, nuisibles notamment à la ténacité globale des pièces, mais également à la soudabilité ou à l'aptitude à la découpe thermique des pièces.

Ces problèmes de ségrégation sont d'autant plus marqués que les pièces considérées sont de section importante. C'est le cas, en particulier des pièces dont la section peut atteindre plusieurs décimètres voire plus d'un mètre, notamment du fait de la nécessité d'ajouter des éléments d'alliage en quantité relativement importante pour obtenir une trempabilité suffisante pour permettre de réaliser de telles pièces.

Afin de réduire l'importance de ces zones ségrégées, on utilise parfois des techniques de fabrication de lingot du type refusion sous laitier électro-conducteur (ESR) ou refusion sous vide. Ces techniques sont particulièrement efficaces pour obtenir des pièces de grande dimension très homogènes, et par conséquent ayant des propriétés d'emploi satisfaisantes. Cependant, elles présentent l'inconvénient d'être extrêmement coûteuses. De ce fait, ces techniques sont utilisées essentiellement pour des pièces pour lesquelles de très hautes performances sont exigées et qui, compte tenu de leurs utilisations, peuvent supporter des coûts de fabrication très élevés.

Afin de réduire l'effet de cette ségrégation, on a également proposé d'utiliser des traitements thermiques d'homogénéisation. Ces traitements thermiques, qui ont pour but d'atténuer les variations de composition chimique locales par diffusion des éléments chimiques des zones les plus chargées vers les zones les moins chargées, présentent l'inconvénient d'être extrêmement longs et donc extrêmement coûteux.

Le but de la présente invention est de remédier à ces inconvénients en proposant un acier qui permet d'obtenir des caractéristiques mécaniques élevées pouvant atteindre 400HB, voire 500 HB, y compris à coeur de pièces très massives, tout en présentant des variations de dureté dues aux ségrégations relativement faibles.

A cet effet, l'invention a pour objet un acier à haute résistance dont la composition chimique comprend, en poids :

$0,03\% \leq C \leq 0,7\%$
$Si \leq 0,49\%$
$2,5\% < Mn \leq 4\%$
et $Mn > 3\%$ si $C < 0,2\%$
$Ni \leq 0,9\%$
$1\% \leq Cr \leq 5\%$
$Mo + W/2 \leq 1\%$
$Cu \leq 0,9\%$
$S + Se/2 + Te/3 < 0,020\%$
$Al \leq 0,1\%$

Le reste étant du fer et des impuretés résultant de l'élaboration.

De préférence, la composition chimique satisfait une ou plusieurs des conditions suivantes :

$Cr > 2,5\%$
$Cr < 3,5\%$
$Ni < 0,5\%$
$Cu < 0,4\%$
$Mo + W/2 < 0,3\%$

En particulier, dans un mode de réalisation préférentiel, la composition chimique est telle que :

$0,03 \leq C \leq 0,3\%$

et
2,7% ≤ Cr ≤ 3%
Mo ≤ 0,3%

L'invention concerne également un bloc en acier selon l'invention qui a une structure bainitique, martensite-bainitique ou martensitique et dont l'écart de dureté entre les zones plus dures et les zones moins dures du bloc, résultant des veines ségrégées, est inférieure à 20% environ de la dureté moyenne du bloc.

L'invention va maintenant être décrite de façon plus précise mais non limitative en regard de l'unique figure annexée et illustrée par des exemples.

La figure annexée est un graphique montrant la teneur en carbone à viser en fonction de dureté souhaitée pour un acier à haute caractéristique selon l'invention, après un revenu à 550°C (courbe 1) ou après un revenu en dessous de 500°C (courbe 2), pour une composition de base : 0,15% de silicium, 3,3% de manganèse, 3% de chrome, 0,25% de molybdène et pour des blocs qui ont été refroidis à l'air après normalisation à 900°C.

Afin de réaliser des pièces de très fortes épaisseurs, l'épaisseur pouvant atteindre 500 mm voire dépasser 1 mètre, et pour que la dureté moyenne soit bien homogène entre le coeur et la surface, il est nécessaire d'utiliser un acier dont la trempabilité est suffisante afin d'obtenir une structure homogène sans qu'il soit nécessaire de réaliser une trempe dans un milieu de trempe trop brutal. En effet, plus le milieu de trempe est brutal, plus les variations de vitesses de refroidissement à l'intérieur du bloc sont importantes et, de ce fait , plus les risques d'obtenir une hétérogénéité de structure sont importants. En revanche, lorsque la trempabilité est suffisante, un refroidissement à l'air qui conduit à des différences relativement modestes de refroidissement entre la surface et le coeur permet d'obtenir une structure satisfaisante qui est alors bien homogène. Naturellement, ces conditions de trempe n'ont pas d'incidence directe sur le problème des variations locales de dureté résultant des ségrégations.

Afin d'obtenir une trempabilité suffisante, on considère en général qu'il est nécessaire d'utiliser des compositions chimiques fortement chargées en éléments d'alliage. Cependant, ces éléments d'alliage ont pour effet d'induire des ségrégations qui peuvent être importantes.

Bien qu'il soit considéré généralement que, plus les éléments d'alliage ont tendance à ségréger, plus leur incidence sur l'écart de dureté des veines ségrégées est important, les inventeurs ont constaté de façon tout à fait nouvelle et inattendue qu'il n'y avait pas de corrélation entre l'intensité du sur-durcissement en veine ségrégée en éléments d'alliage et les propensions respectives à ségréger de chacun de ces éléments d'alliage.

La propension à ségréger des éléments d'alliage et leurs effets sur les duretés des veines ségrégées est illustrée par les essais suivants, au cours desquels on a réalisé six coulées d'acier en lingot de trois tonnes dont les compositions sont reportées au tableau 1.

Tableau 1.

|   | C | Si | Mn | Cr | Mo | Ni |
|---|---|----|----|----|----|----|
| **1** | 170 | 200 | 1500 | 2800 | 100 | 1500 |
| **2** | 170 | 500 | 1500 | 2800 | 100 | 1500 |
| **3** | 170 | 200 | 2800 | 2800 | 100 | 1500 |
| **4** | 170 | 200 | 1500 | 1300 | 100 | 1500 |
| **5** | 170 | 200 | 1500 | 2800 | 400 | 1500 |
| **6** | 170 | 200 | 1500 | 2800 | 100 | 200 |

Ces lingots ont été laminés pour en faire des tôles épaisses de 50 mm qui ont été découpés de façon à constituer des échantillons sur lesquels on a mesuré à la fois la dureté moyenne et les durcissements dus aux ségrégations. Les échantillons prélevés sur chacune des tôles ont été examinés d'une part à l'état brut de refroidissement dans lequel ils avaient une structure martensitique, et d'autre part à l'état revenu à une température de 500°C auquel ils avaient une structure martensitique revenue.

Sur chacun des échantillons, on a mesuré concurremment, dans les veines ségrégées :

- les taux de ségrégation moyens de chacun des différents alliages (Si, Mn, Cr, Mo, Ni) au moyen de dosages microsonde. La tendance à ségréger propre à chaque élément a été caractérisée au moyen du ratio (%) rapportant l'écart entre composition moyenne en veine ségrégée Cv et composition à la coulée C0 à la valeur de cette dernière (soit : (Cv - C0)/C0);
- la dureté moyenne des veines ségrégées, au moyen d'essais classiques de type Vickers sous 300 g. Le sur-durcissement en veines correspond à l'écart entre la dureté moyenne des veines et celle de la matrice environnante hors veines. En comparant ensuite ces mesures entre coulées prises deux à deux, on peut déduire la contribution au sur-durcissement en veines attribuable spécifiquement à la ségrégation de chaque élément d'alliage.

La part de sur-durcissement en veines attribuable à un élément est la résultante de la ségrégation de cet élément c'est à dire, par définition, le produit de la teneur nominale en cet élément par son taux de ségrégation. Par conséquent on comparera valablement les éléments quant à leur nocivité à cet égard en rapportant chaque fois la contribution au sur-durcissement à un même niveau référence de teneur nominale (on a choisi arbitrairement 0.2%).

Ainsi, à titre d'exemple, l'écart de dureté moyenne de 33 HV trouvé entre les coulées 1 et 3 (à 1.5% et 2.8 % de Mn) conduit à évaluer un sur-durcissement de 33x(.2% / 1.3%) = 5 Hv pour 0.2 % de Mn (cf. tableau ci-après).

Les résultats sont représentés au tableau 2 ci-dessous.

Tableau 2.

| Eléments d'alliage | Tendance propre de l'élément à ségréger | Effet sur-durcissant (Hv) constaté en veines ségrégées rapporté à 0.2% d'alliage (après revenu) |
|---|---|---|
| Si | 35% | 8 |
| Cr | 26% | 17 |
| Mn | 42% | 5 |
| Mo | 67% | 70 |
| Ni | 32% | 3 |

Exprimée en termes qualitatifs, la tendance propre de chaque élément à ségréger et son effet de durcissement en veine ségrégée sont indiqués au tableau 3 ci-dessous.

Tableau 3.

| Eléments d'alliage | Tendance propre de l'élément à ségréger | Effets sur-durcissants (Hv) constatés en veines ségrégées |
|---|---|---|
| Si | Moyen | Faible |
| Cr | Faible | Moyen |
| Mn | Assez Fort | Très faible |
| Mo, V | Fort | Très fort |
| Ni | Moyen | Très faible |

Au vu de ces résultats, il apparaît que, contrairement aux idées généralement admises, afin d'obtenir une très bonne trempabilité tout en ayant de faible ségrégation, il est souhaitable de choisir une composition comprenant beaucoup de manganèse, peu de chrome et peu de molybdène, il peut être également intéressant de prévoir beaucoup de nickel. Cependant le nickel étant un élément très coûteux, il est préférable d'utiliser plutôt du manganèse que du nickel.

De ces résultats, il apparaît que, pour réaliser des aciers permettant de fabriquer des pièces de très grandes dimensions à haute caractéristique et ayant des variations de dureté résultant des ségrégations relativement faibles, il est souhaitable d'utiliser un acier dont la composition satisfait aux conditions suivantes :

- carbone : de 0,03% à 0,7% en % en poids, cet élément a pour effet principal d'agir sur la dureté de la martensite, aussi sa teneur est choisie en fonction du niveau de dureté que l'on souhaite obtenir sur les pièces. Pour déterminer la teneur en carbone en fonction de la dureté visée, on peut par exemple diviser l'échelle de dureté par tranches de 40HB, entre 320HB et 600HB. Ces domaines correspondent à peu près à des domaines classiques d'utilisation des aciers résistants à l'abrasion ou des aciers pour outillage.

On peut également considérer les domaines de teneur en carbone suivants, de 0,03% à 0,06% de carbone, de 0,07% à 0,015%, de 0,16% à 0,25%, de 0,26% à 0,35%, de 0,36% à 0,45%, de 0,46% à 0,55% de carbone. A chacun de ces domaines de composition de teneur en carbone correspond, pour un traitement thermique déterminé, un domaine de dureté. En effet, selon que l'acier a subi un revenu vers 550°C ou n'a pas subi de revenu ou n'a subi qu'un traitement à une température sensiblement inférieure à 500°C, le niveau de dureté pour une teneur en carbone identique n'est pas le même. D'une façon générale, le domaine de dureté le plus faible correspondant à la teneur en carbone la plus faible et le domaine de dureté la plus élevé à la teneur en carbone la plus élevée. Cependant, les frontières de ces domaines de teneur en carbone correspondant aux duretés varient légèrement en fonction des teneurs dans les autres éléments d'alliage et en fonction de la vitesse de refroidissement, et également en fonction du traitement thermique qui est effectué sur les pièces.

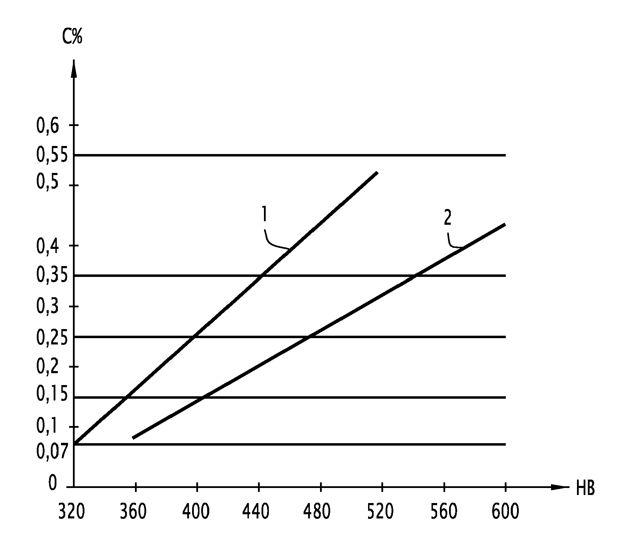

Cette segmentation est illustrée par un exemple d'acier dont la composition comprend outre le carbone : 0,15% de silicium, 3,3% de manganèse, 3% de chrome, 0,25% de molybdène. A la figure 1, on a représenté l'évolution de la dureté en fonction de la teneur en carbone pour des blocs qui ont été refroidis à l'air après normalisation à 900°C faisant suite à un laminage à chaud préalable. Les blocs ont subi un revenu pour l'un à 480°C et pour le deuxième à 550°C. Comme on le voit sur la figure, le bloc qui a été revenu à la température de 480°C a une dureté de 360HB pour une teneur en carbone de 0,1% alors que le même acier revenu à 550°C a une dureté de 320 HB seulement. De même, lorsque l'acier contient environ 0,4% de carbone, le bloc revenu à 480°C a une dureté de l'ordre de 580HB alors que le bloc qui a été revenu à 560°C a une dureté de 460HB. La teneur minimale en carbone 0,03% correspond à une valeur en deçà de laquelle la ségrégation durcissante et l'intérêt attaché à sa réduction deviennent faibles. On notera que les duretés obtenues varient peu par l'application d'un revenu dès lors que sa température ne dépasse pas sensiblement 480°C.

La teneur maximale retenue pour la teneur en carbone correspond aux applications envisagées mais l'invention conserve tout son intérêt pour les teneurs supérieures pouvant atteindre 1%.

- silicium : Cet élément qui sert notamment à désoxyder le bain d'acier liquide lors de l'élaboration a une teneur en général supérieure à 0,025% et de préférence supérieure à 0,05% ou même, peut dépasser 0,1%. Cependant, la teneur en cet élément doit rester inférieure à 0,49%, et de préférence rester inférieure à 0,35%, mieux encore inférieure à 0,19%, et si cela est possible compte tenu des exigences de désoxydation du bain, rester inférieure à 0,1%. En effet, le silicium est un élément qui tend à accroître de façon très importante la ségrégation massive en tête de lingot (ségrégation dite majeure), laquelle sert ensuite à alimenter les veines ségrégées qui sont donc d'autant plus importantes que la ségrégation en tête de lingot est importante. En outre, le silicium tend à dégrader la conductibilité thermique de l'acier, ce qui peut être défavorable dans certaines applications telles que, notamment, les moules de moulage de matière plastique. Enfin, le silicium a un effet néfaste sur la sensibilité à la fragilité de revenu réversible, qui est à prendre en considération, notamment lorsque les vitesses de refroidissement des produits sont faibles, ce qui est le cas pour les applications concernées pour cet acier.
- chrome : Cet élément a un effet favorable sur la trempabilité et, du fait de sa tendance à former des carbures, a un effet favorable sur la résistance à l'adoucissement au revenu, et l'effet de sur-durcissement sur les veines ségrégées est beaucoup moins marqué que celui du molybdène ou du tungstène il doit être ajouté dans des teneurs de préférence supérieures à 1% et mieux encore supérieures à 2,5%, mais doivent rester inférieures à 5%, et de préférence inférieures à 3,5% et mieux encore être comprises entre 2,7% et 3% afin d'obtenir à la fois la trempabilité suffisante, la résistance à l'adoucissement revenu satisfaisante et en même temps sans conduire à des sur-durcissement trop important des zones ségrégées.
- molybdène et tungstène : ces deux éléments, qui ont une tendance très marquée à former des carbures favorables à une bonne résistance à l'adoucissement au revenu, présentent cependant l'inconvénient d'avoir un effet très important sur les sur-durcissements des zones ségrégées. Aussi, le tungstène ayant le même effet que le molybdène à raison de 2% de tungstène pour 1% de molybdène, on limitera la somme Mo + W/ 2 à 1 %, de préférence à 0,5%, voire à 0,3%.
- vanadium, Niobium : Ces éléments ayant des effets extrêmement défavorables sur les sur-duretés des zones ségrégées, l'acier ne fera pas l'objet d'additions volontaires de vanadium ou niobium qui pourront, cependant, exister à l'état de résiduels, la teneur en vanadium devant rester inférieure à 0,010% et mieux, inférieure à 0,005%, et la teneur en niobium devant rester inférieure à 0,050% et mieux, inférieure à 0,010%.
- manganèse : cet élément a un effet très favorable sur la trempabilité et à l'avantage également d'avoir un effet très modeste sur les sur-duretés des zones ségrégées. De ce fait, il est utilisé préférentiellement pour obtenir la trempabilité. Aussi, la teneur en manganèse est comprise entre 2,5% et 4%. De préférence, lorsque la teneur en carbone est inférieure à 0,20%, la teneur en manganèse est supérieure à 3% de façon à ce que l'effet combiné du manganèse et du carbone sur la trempabilité soit suffisant.
- nickel : Cet élément a un effet favorable sur la trempabilité et un effet modeste sur les sur-duretés des zones ségrégées. Cependant, cet élément est très coûteux, aussi sa teneur est inférieure à 0,9% et de préférence inférieure à 0,5% et mieux encore n'est qu'à des niveaux résiduels.
- cuivre : la teneur en cet élément qui est souvent présent sous forme de résiduel doit rester inférieure à 0,9%, de préférence inférieure à 0,4% et mieux encore plus faible encore, inférieure à 0,2% car cet élément n'a pas d'effet particulièrement favorable sur les propriétés de l'acier considéré.

- aluminium : cet élément qui en a un effet favorable sur la désoxydation du bain d'acier liquide au cours d'élaboration et qui, à l'état solide, permet de contrôler la taille du grain austénitique par formation de nitrure d'aluminium, a une teneur inférieure à 0,1% et mieux inférieure à 0,03%.

- soufre, Se, Te : le soufre qui est une impureté toujours présente au moins à l'état de trace, peut avoir un effet favorable sur l'usinabilité. Cependant, si les teneurs sont trop importantes il a un effet défavorable sur la ténacité, et éventuellement sur l'aptitude au polissage des aciers. Le sélénium et le tellure, ont des effets comparables à celui du soufre à raison de 2 parts de sélénium pour 1 part de soufre ou de 3 parts de tellure pour 1 part de soufre. Aussi, notamment pour les applications requérant une bonne aptitude à la polissabilité, la somme S + Se/2 + Te/3 est à l'état de trace ou supérieure à 0,005%, mais reste, en tout état de cause, inférieure à 0,020%.

Le reste de la composition est constitué de fer et d'impuretés résultant de l'élaboration.

Pour fabriquer des pièces constituées de l'acier qui vient d'être décrit, on commence par élaborer un acier avec la composition qui est choisie, puis on coule cet acier sous forme d'un demi-produit, par exemple un lingot, qui est mis en forme par déformation plastique à chaud, soit par forgeage soit par laminage.

L'ébauche ainsi obtenue qui constitue un bloc d'acier est alors utilisée soit à l'état brut de laminage ou de forgeage, soit après un traitement thermique adapté à l'utilisation envisagé que l'homme du métier sait choisir.

L'état brut de laminage ou de forgeage est utilisé notamment pour des applications telles que la fabrication de pièces destinées à résister à l'usure dans l'industrie minérale ou les travaux publics, applications dans lesquelles le coût de l'acier est un élément très important du choix.

Lorsque des propriétés plus précises sont souhaitées, les pièces ou les blocs bruts de forge ou de laminage éventuellement découpé ou pré usinés sont austénitisés par chauffage à une température supérieure à la température $AC_3$, et en général de l'ordre de 900°C puis refroidi à l'air libre ou éventuellement dans un milieu de trempe ayant un refroidissement un peu plus rapide mais sans que cela soit souhaité. Cette austénitisation suivi d'un refroidissement à l'air à l'intérêt de renforcer le rapport de la limite d'élasticité à la résistance à la traction.

Les blocs qu'ils soient brut de déformation à chaud où qu'ils soient réausténisés et refroidi lentement peuvent avantageusement être soumis à un traitement thermique de revenu à une température supérieure à 450°C mais inférieure à 550°C. Un tel traitement de revenu qui ne change pas de façon significative la dureté, à l'avantage de réduire le niveau de contrainte résiduel dans les bacs ou les pièces tels qu'ils sont directement issus des traitements précédents.

Cette réduction des contraintes internes est particulièrement intéressante pour des pièces de précision obtenues après un usinage très important par enlèvement de matière. De ce point de vue, le traitement de ré-austénisation et de refroidissement lent à l'avantage par rapport à l'état brut de mise en forme à chaud de relaxer au moins une partie des contraintes résiduelles.

Enfin, le traitement de revenu peut avoir l'avantage de renforcer encore un peu le rapport de la limite d'élasticité à la résistance à la traction.

Dans une variante, le traitement de revenu peut être remplacé par un traitement de détente à une température comprise entre 150°C et 250°C.

Un tel traitement de détente ne conduit pas à des variations appréciables de la dureté. En revanche, en général, il conduit à une amélioration significative de la ténacité, ce qui est utile à la fois pour faciliter la mise en oeuvre des produits et d'autre part pour améliorer la durée de vie en service des pièces.

Un tel traitement est particulièrement adapté pour les pièces destinées à travailler dans des conditions qui nécessitent une résistance importante à l'usure par frottement métal sur métal que l'on rencontre dans l'industrie de la mécanique, ou l'usure par abrasion que l'on rencontre dans les travaux publics, dans les mines ou les carrières.

A titre d'exemple, on a réalisé quatre coulées d'acier repérées 1, 2, 3 et 4, que l'on a comparé à des aciers repérés C1 et C2, donnés à titre de comparaison.

Avec ces aciers dont les compositions sont données au tableau 4, on a fabriqué des tôles d'épaisseur 150mm par laminage à chaud qui, après refroidissement ont été austénitisées à nouveau par chauffage à 900°C puis refroidies à l'air.

Tableau 4.

|  | C | Si | Mn | Ni | Cr | Mo | V | H | dH | dH/ H (%) | Tf | Soud abil | Econ om |
|---|---|---|---|---|---|---|---|---|---|---|---|---|---|
| C1 (sp 300) | 0,24 | 0,2 | 1,3 | 0,3 | 1,9 | 0,49 | - | 310 | 65 | 21 | 150 | + | ++ |
| C2 (2714) | 0,53 | 0,4 | 0,8 | 1,6 | 1,1 | 0,55 | 0,11 | 395 | 119 | 30 | 41 | + | + |

(suite)

| | | C | Si | Mn | Ni | Cr | Mo | V | H | dH | dH/ H (%) | Tf | Soud abil | Econ om |
|---|---|---|---|---|---|---|---|---|---|---|---|---|---|---|
| | Acier inv **1** rev 550 °C | 0,11 | 0,10 | 3,4 | 0,2 | 2,9 | 0,28 | - | 340 | 41 | 12 | 135 | +++ | +++ |
| | Acier inv **2** rev 480°C | 0,13 | 0,15 | 3,2 | 0,2 | 3,0 | 0,22 | - | 405 | 48 | 15 | 105 | ++ | +++ |
| | Acier inv **3** sans rev | 0,23 | 0,15 | 3,1 | 0,2 | 3,5 | 0,08 | - | 430 | 68 | 16 | 82 | ++ | ++++ |
| | Acier inv **4** déten 200°C | 0,041 | 0,45 | 3,5 | 0,2 | 2,7 | 0,05 | - | 560 | 73 | 13 | - | | |

Sur les tôles obtenues, on a mesuré la dureté moyenne, l'écart de dureté entre les parties les plus dures des zones ségrégées et les parties les moins dures des tôles, on a évalué l'usinabilité par un temps de fraisage, la soudabilité et l'intérêt économique de l'acier.

Les résultats indiqués également au tableau 4 montrent que les aciers selon l'invention tout en ayant des duretés qui peuvent être relativement importantes puisqu'elles s'échelonnent entre 340HB et 560HB ont des variations de dureté qui représentent moins de 16% de la dureté moyenne contre plus de 20% pour les aciers selon l'art antérieur. En outre, ces aciers ont une usinabilité satisfaisante, une aptitude au soudage meilleure que celle des aciers donnés à titre de comparaison et sont plus économiques.

## Revendications

1.  Acier à haute résistance dont la composition chimique comprend, en poids :

    $0,03\% \leq C \leq 0,7\%$
    $Si \leq 0,49\%$
    $2,5\% < Mn \leq 4\%$
    et $Mn > 3\%$ si $C < 0,2\%$
    $Ni \leq 0,9\%$
    $1\% \leq Cr \leq 5\%$
    $Mo + W/2 \leq 1\%$
    $Cu \leq 0,9\%$
    $S + Se/2 + Te/3 < 0,020\%$
    $Al \leq 0,1\%$
    Le reste étant du fer et des impuretés résultant de l'élaboration.

2.  Acier à haute résistance selon la revendication 1, **caractérisé en ce que** la composition chimique est telle que :

    $Cr > 2,5\%$

3.  Acier à haute résistance selon la revendication 1 ou la revendication 2, **caractérisé en ce que :**

    $Cr < 3,5\%$

4.  Acier selon l'une quelconque des revendications 1 à 3, **caractérisé en ce que :**

Ni < 0,5%

**5.** Acier selon l'une quelconque des revendications 1 à 4, **caractérisé en ce que :**

Cu < 0,4%

**6.** Acier selon l'une quelconque des revendications 1 à 5, **caractérisé en ce que :**

Mo+ W/2 < 0,3%

**7.** Acier selon l'une quelconque des revendications précédente, **caractérisé en ce que** la composition chimique est telle que :

$0,03 \leq C \leq 0,3\%$
et
$2,7\% \leq Cr \leq 3\%$
$Mo \leq 0,3\%$

**8.** Bloc en acier dont la composition est selon l'une quelconque des revendications 1 à 7, **caractérisé en ce que** l'acier a une structure bainitique, martensite-bainitique ou martensitique et **en ce que** l'écart de dureté entre les zones plus dures et les zones moins dures du bloc, résultant des veines ségrégées, est inférieure à 20% de la dureté moyenne du bloc.

Europäisches
Patentamt

European
Patent Office

Office européen
des brevets

**RAPPORT DE RECHERCHE EUROPEENNE**

Numéro de la demande

EP 08 30 0199

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 759 299 A (YOKOYAMA HIROYASU [JP] ET AL) 2 juin 1998 (1998-06-02) * abrégé; exemples C6-C8; tableaux 14,15 * | 1-8 | INV. C22C38/18 C22C38/58 C22C38/22 B29C33/38 |
| X | DE 651 845 C (BOEHLER & CO AKT GES GEB) 20 octobre 1937 (1937-10-20) * revendication 1 * | 1-8 | |
| X | JP 06 184695 A (HITACHI LTD) 5 juillet 1994 (1994-07-05) * abrégé * | 1-8 | |
| A | EP 0 882 808 A (THYSSEN FRANCE SA [FR]) 9 décembre 1998 (1998-12-09) * revendications 1-6 * | 1-8 | |
| A | US 5 139 737 A (SUDO KOICHI [JP] ET AL) 18 août 1992 (1992-08-18) * revendications 1-12 * | 1-8 | |
| A | JP 2001 294973 A (DAIDO STEEL CO LTD) 26 octobre 2001 (2001-10-26) * abrégé * | 1-8 | DOMAINES TECHNIQUES RECHERCHES (IPC) C22C B29C |
| A | US 2005/115644 A1 (BEGUINOT JEAN [FR]) 2 juin 2005 (2005-06-02) * revendications 1-11; tableaux 1,2 * | 1-8 | |
| A | US 5 855 845 A (BEGUINOT JEAN [FR] ET AL) 5 janvier 1999 (1999-01-05) * revendications 1-20 * | 1-8 | |

Le présent rapport a été établi pour toutes les revendications

| Lieu de la recherche | Date d'achèvement de la recherche | Examinateur |
|---|---|---|
| Munich | 24 octobre 2008 | Catana, Cosmin |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 08 30 0199

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-10-2008

| Document brevet cité au rapport de recherche | | Date de publication | Membre(s) de la famille de brevet(s) | | Date de publication |
|---|---|---|---|---|---|
| US 5759299 | A | 02-06-1998 | AUCUN | | |
| DE 651845 | C | 20-10-1937 | AUCUN | | |
| JP 6184695 | A | 05-07-1994 | AUCUN | | |
| EP 0882808 | A | 09-12-1998 | AT | 212385 T | 15-02-2002 |
| | | | AU | 748866 B2 | 13-06-2002 |
| | | | AU | 6981098 A | 10-12-1998 |
| | | | BR | 9814777 A | 24-10-2000 |
| | | | CN | 1215762 A | 05-05-1999 |
| | | | DE | 69803514 D1 | 14-03-2002 |
| | | | DE | 69803514 T2 | 29-08-2002 |
| | | | ES | 2170462 T3 | 01-08-2002 |
| | | | FR | 2764308 A1 | 11-12-1998 |
| | | | HK | 1019901 A1 | 02-08-2002 |
| | | | PT | 882808 T | 31-07-2002 |
| | | | SG | 63849 A1 | 30-03-1999 |
| US 5139737 | A | 18-08-1992 | AT | 125879 T | 15-08-1995 |
| | | | DE | 69021342 D1 | 07-09-1995 |
| | | | DE | 69021342 T2 | 04-01-1996 |
| | | | EP | 0431557 A1 | 12-06-1991 |
| | | | JP | 2881869 B2 | 12-04-1999 |
| | | | JP | 3177536 A | 01-08-1991 |
| JP 2001294973 | A | 26-10-2001 | AUCUN | | |
| US 2005115644 | A1 | 02-06-2005 | AT | 298010 T | 15-07-2005 |
| | | | AU | 2003258841 A1 | 13-10-2003 |
| | | | BR | 0308832 A | 25-01-2005 |
| | | | CA | 2480651 A1 | 09-10-2003 |
| | | | CN | 1646717 A | 27-07-2005 |
| | | | DE | 60300867 D1 | 21-07-2005 |
| | | | DE | 60300867 T2 | 24-11-2005 |
| | | | EP | 1490526 A1 | 29-12-2004 |
| | | | ES | 2240945 T3 | 16-10-2005 |
| | | | FR | 2838138 A1 | 10-10-2003 |
| | | | WO | 03083153 A1 | 09-10-2003 |
| | | | HK | 1067669 A1 | 19-08-2005 |
| | | | JP | 2005527703 T | 15-09-2005 |
| | | | MX | PA04009501 A | 17-05-2005 |
| | | | RU | 2309190 C2 | 27-10-2007 |
| | | | UA | 77516 C2 | 15-03-2005 |
| US 5855845 | A | 05-01-1999 | AT | 227354 T | 15-11-2002 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 08 30 0199

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-10-2008

| Document brevet cité au rapport de recherche | Date de publication | Membre(s) de la famille de brevet(s) | Date de publication |
|---|---|---|---|
| US 5855845 A | | AU 708786 B2 | 12-08-1999 |
| | | AU 1903897 A | 06-11-1997 |
| | | CA 2203488 A1 | 29-10-1997 |
| | | CN 1174896 A | 04-03-1998 |
| | | DE 69716806 D1 | 12-12-2002 |
| | | DE 69716806 T2 | 24-07-2003 |
| | | EP 0805220 A1 | 05-11-1997 |
| | | ES 2186851 T3 | 16-05-2003 |
| | | FR 2748036 A1 | 31-10-1997 |
| | | JP 10096049 A | 14-04-1998 |
| | | PT 805220 T | 31-03-2003 |
| | | TW 426746 B | 21-03-2001 |

EPO FORM P0460

Pour tout renseignement concernant cette annexe : voir Journal Officiel de l'Office européen des brevets, No.12/82